(19)

Europäisches
Patentamt

European
Patent Office

Office européen
des brevets

(11) **EP 4 197 733 A1**

(12) **EUROPEAN PATENT APPLICATION**

(43) Date of publication:
 **21.06.2023 Bulletin 2023/25**

(21) Application number: **21215600.4**

(22) Date of filing: **17.12.2021**

(51) International Patent Classification (IPC):
 ***B29B 17/02*** (2006.01)   ***C09D 9/00*** (2006.01)

(52) Cooperative Patent Classification (CPC):
 **C09D 9/00; B29B 17/02;** B29K 2105/0032;
 B29L 2009/006

(84) Designated Contracting States:
 **AL AT BE BG CH CY CZ DE DK EE ES FI FR GB
 GR HR HU IE IS IT LI LT LU LV MC MK MT NL NO
 PL PT RO RS SE SI SK SM TR**
 Designated Extension States:
 **BA ME**
 Designated Validation States:
 **KH MA MD TN**

(71) Applicant: **Universiteit Gent**
 **9000 Gent (BE)**

(72) Inventors:
 • **DE MEESTER, Steven**
  **9660 Brakel (BE)**
 • **ÜGDÜLER, Sibel**
  **9820 Merelbeke (BE)**
 • **ROOSEN, Martijn**
  **9041 Oostakker (BE)**

(54) **A METHOD TO DEINK AND/OR TO DELAMINATE PLASTIC MATERIAL USING A MIXTURE COMPRISING AN OXIDIZING INORGANIC ACID AND A SATURATED HYDROCARBON**

(57)   The invention relates to a method to deink and/or to delaminate plastic material. In particular the invention relates to a method to deink and to delaminate plastic material, preferably in a single step. The method comprises the step of contacting the plastic material with a mixture comprising an oxidizing inorganic acid and a saturated hydrocarbon. The oxidizing inorganic acid has a standard electrode potential of at least 0 V and the saturated hydrocarbon has a number of carbon atoms of maximum 12. The invention also relates to an installation to deink and/or to delaminate plastic material.

EP 4 197 733 A1

## Description

### Field of the invention

The present invention relates to a method to deink and/or to delaminate plastic material, for example plastic waste. The invention also relates to an installation to deink and/or to delaminate plastic material.

### Background art

Nowadays plastic packaging is abundantly used. The demand for plastic packaging continues to grow significantly due to the exceptional functional performance of plastic packaging, including among others, oxygen, moisture and light barrier properties, printability and food compliance. However, recycling rates of plastic packaging are still low.

Plastic packaging is typically heavily printed with inks, for example to provide information about the content and for marketing purposes to make them more appealing to consumers. Although inks are considered to be necessary components of plastic packaging, they are a significant source of contamination in plastic recycling. As all printed plastic films are generally collected and processed together, a low quality brownish, grayish or black recyclate is obtained, making it only suitable for downcycled products. The presence of ink also causes recycled films to be less stiff, weaker, and denser compared to the original material. Furthermore, during the processing or reprocessing, residual ink can decompose and produce gases causing rancid odor formation and also decrease the physical properties of a raw material. Hence, deinking of plastics could solve various problems and increase the quality, application potential, and price of the plastic waste.

Ink structures on plastic materials are chemically complex and comprise resins (15-50 %), solvents (up to 65 %), colorants (5 - 30 %) and additives (up to 10 %). The composition of an ink may differ considerably and is for example dependent on the printing process and on the substrate. For most substrates solvent-based inks in which the resin is dissolved in a suitable solvent are used as they allow sufficient wetting and adhesion. Water-based inks are generally used for substrates which can promote absorption mechanism such as paper and board. In addition to solvent and water-based inks where drying of inks is performed though evaporation of the liquid medium, in UV-based inks UV radiation is used for drying, which allows to ink to immediately form a three-dimensionally cross-linked film. UV-based inks require reactive resins such as acrylates which can react with free radicals created by UV radiation.

Plastic packaging is often a laminated structure of different polymer layers in order to increase their physico-chemical properties. Combination of functionality of each polymer provides plastic film with superior preservation performances such as among others, extended shelf life, high mechanical strength, good sealability. For example, sealing properties of PET are poor, thus it is often laminated with polyolefins. Similarly, use of aluminum layer provides protection against UV light, as such nutritional value of products are preserved for a longer time period.

Although the combination of different polymer layers extends the functionality and application area of plastic packaging, they make the recycling of multilayer packaging more complex. For example, during mechanical recycling, incompatibility issues may arise in the polymer blends due to their difference in physico-chemical properties, such as polyethylene (PE) and polyethylene terephthalate (PET). Similarly, in thermochemical recycling heterogeneous polymers such as PET, polyamide (PA), polycarbonate (PC) contaminate polyolefinic plastic waste. Therefore, multilayer plastic film fractions are still mainly incinerated or landfilled to date. In this respective, delamination comes in the picture as solution for multilayered packaging materials. By separating the different layers of a laminate structure, a more pure waste stream can be achieved in terms of polymer composition and, hence, increases recycling rates.

Although there is a high need for deinking and/or delamination processes, up to now industrial application of effective deinking procedures is limited.

Water-based liquid solutions comprising surfactants are known in the art to deink plastics (EP2832459 and EP1419829). Although water-based liquid solutions are easy to handle from safety perspective, treatments using such solutions are typically not able to deink all types of inks and/or all types of plastic films on the current market. These treatments usually work well on post-consumer and industrial film waste streams with well-defined compositions if the ink is on top of the monolayer or multilayer structure. However, a post-consumer waste stream typically comprises a mix of monolayer and multilayer films. For some plastic waste, the ink is between two layers. Especially for plastic films used in direct contact with food, the ink is usually covered by one or more layers in order to prevent leaching.

DE19651571 describes a method to recycle plastic material using ethyl acetate as extractant. This method only works for plastic material having ink on top of the monolayer or multilayer structure. This means that this method is not suitable to deink real (post-consumer) waste streams comprising plastic material having an ink layer protected by one or more polymer layers. For food-contact packaging material the ink layer is usually protected by one or more polymer layers in order to prevent any leaching. In addition, this method using ethyl acetate as extractant does not work to deink all type of inks, for example inks that do not dissolve for example because they are cross-linked. In particular a method using ethyl acetate does not work to deink UV-based inks even if they are on top of a monolayer or multilayer structure. UV-based inks are frequently used in packaging material since they offer many benefits such as lightfastness, resistance to smearing, glossiness and/or sharp contracts.

WO2021/198437 describes a method to deink plastic materials using an oxidizing inorganic acid. Although such method is efficient to deink and delaminate a mixture of plastic material comprising different types of plastics including monolayer and multilayer structures and including different types of inks either deposited on top of the plastic material or between different layers, a two-step method is required.

Deinking of monolayer or multilayer plastic material, for example monolayer or multilayer plastic waste remains challenging and there is a need for improved methods to delaminate. Furthermore, there is a need to provide a method allowing to delaminate and deink in one step.

## Summary of the invention

It is an object of the present invention to provide a method to deink and/or to delaminate plastic material such as plastic waste avoiding the drawbacks of the prior art.

It is also an object of the present invention to provide a method to deink and to delaminate plastic material in a single step.

It is another object of the present invention to provide a method that allows to deink and/or to delaminate and deink a wide variety of plastic material having different types of inks and/or including different types of multilayer plastic films, plastic material having ink on an outer surface as well as plastic material having ink covered by one or more layers, for example one or more polymer layer.

It is a further object of the present invention to provide a method to deink or to delaminate and deink plastic material without causing neither dissolution nor degradation of the main plastic components of the polymer material.

It is a further object of the present invention to provide a method to deink or to delaminate and deink plastic material that is efficient in removing annoying odours.

It is a further object of the present invention to provide a method that allows removing any type of inks from plastic material such as solvent-based inks, water-based inks and UV-based inks, either from monolayer or from multilayer plastic material.

It is a further object of the present invention to provide an economic viable method to deink plastic material or to delaminate and deink plastic material, in particular plastic waste.

It is a further object of the present invention to provide an installation to deink or to delaminate and deink plastic material, in particular plastic waste.

According to a first aspect of the present invention a method to deink and/or to delaminate plastic material, for example plastic waste, is provided. The method comprises the steps of

- providing plastic material comprising or provided with ink;
- contacting the plastic material with a mixture comprising at least one oxidizing inorganic acid and at least one saturated hydrocarbon, the at least one oxidizing inorganic acid has a standard electrode potential of at least 0 V and the at least one saturated hydrocarbon has a number of carbon atoms of maximum 12 and preferably a number of carbon atoms equal or larger than 5.

The method according to the present invention may further comprise the step of

- separating the thus obtained plastic material from the mixture comprising the at least one oxidizing inorganic acid and the at least one saturated hydrocarbon.

By bringing the plastic material in contact with the mixture comprising the at least one oxidizing inorganic acid and the at least one saturated hydrocarbon as described above, the plastic material is deinked, delaminated or deinked and delaminated. In preferred methods according to the present invention the plastic material is deinked and delaminated.

Although the applicant does not want to be bound by any theory, the saturated hydrocarbon acts as a swelling agent of the polymer layer or polymer layers and the oxidizing inorganic acid allows to oxidize or hydrolyze the ink or inks. The saturated hydrocarbon has due to its apolar structure a high diffusion rate through a polymer layer, in particular through an apolar polymer layer such as polyethylene (PE) or polypropylene (PP) resulting in swollen polymer layer. The oxidizing inorganic acid can then pass through the swollen polymer layer and can react with the ink or inks. The oxidizing inorganic acid allows for example to oxidize inks, for example inks comprising nitrocellulose based resins and/or to hydrolyze inks for example cross-linked structures such as acrylates, polyurethane and nitrocellulose.

Experimental results confirmed that the method according to the present invention results in deinking of plastic materials comprising or provided with different types of inks or with combinations of different types of inks. Experimental results also confirmed that the method according to the present invention results in deinking and/or delamination of different types of plastic material or combinations of plastic material such as multilayered structures of plastic material. Furthermore experimental results confirmed that the method according to the present invention results in deinking and delaminating of plastic materials comprising different types of inks or combinations of different types of inks and comprising different types of plastic material or combinations of plastic material such as multilayered structures of plastic material.

The method according to the present invention allows to deink plastic material comprising or provided with solvent-based inks as for example inks comprising nitrocellulose based resins, polyurethane based resins, polyvinylchloride based resins, ethyl cellulose based resins, cellulose acetate propionate based resins, cellulose acetate butyrate based resins, polyvinyl butyral based resins, polyacrylate based resins, polyamide based resins, and combinations thereof.

The method according to the present invention also allows to deink plastic material comprising or provided with water-based inks as for example inks comprising acrylate based resins, maleics based resins or combinations thereof.

The method according to the present invention also allows to deink plastic material comprising or provided with offset inks as for example modified rosin resins, in particular phenolic modified rosin resins, alkyd based resins and combinations thereof.

The method according to the present invention also allows to deink plastic material comprising or provided with ultraviolet curable (UV) and/or electron beam (EB) curable resins as for example acrylate based resins, for example epoxy acrylate based resins.

An important advantage of the method according to the present invention is that it allows to deink plastic material comprising or provided with different types of inks, for example with solvent-based inks, water based inks, offset inks, UV and/or EB curable inks and any combination thereof.

Furthermore experimental results confirmed that the method according to the present invention results in deinking and delamination of different types of plastic materials such as plastic waste, either plastic materials comprising a monolayer or multilayered polymer structure, including different types of multilayered polymer structures having ink on an outer surface as well as having ink covered by one or more layers, for example one or more polymer layer.

Deinking and/or delaminating can be further improved by applying shear on the plastic material while or after contacting the plastic material with the mixture comprising the at least one oxidizing inorganic acid and the at least one saturated hydrocarbon. Shear can be applied by any method known in the art, for example by stirring, mixing or agitating. Any type of stirring, mixing or agitating known in the art can be considered. For the purpose of the present invention the terms 'stir', 'mix' and 'agitate' can be used interchangeably.

An example of stirring comprises stirring in a continuous stirred tank reactor (CSTR) using a rotating agitator with a rotation speed of for example at least 100 rpm (revolutions per minute), at least 250 rpm, at least 300 rpm or at least 500 rpm. Alternatively or additionally, other methods to induce shear can be considered as well.

In preferred methods, the plastic material is reduced in size, preferably before being contacted with the mixture comprising the at least one oxidizing inorganic acid and the saturated hydrocarbon. The reduction in size can be obtained by any technique known in the art, for example by milling, shredding, grinding and/or comminuting. The plastic material is preferably reduced in size to obtain plastic material having a sieve diameter between 0.01 cm and 20 cm, for example between 0.01 cm and 10 cm or between 0.1 cm and 4 cm. The term 'sieve diameter' refers to the size of a sieve opening (the width of a square aperture) through which a particle will pass.

The method to deink and/or to delaminate according to the present invention may comprise a continuous or discontinuous (batch) process. In a continuous process the plastic material, the mixture comprising the at least one oxidizing inorganic acid and the at least one saturated hydrocarbon or both the plastic material and the mixture comprising the at least one oxidizing inorganic acid and the at least one saturated hydrocarbon can be continuously introduced. In preferred methods, the mixture comprising the at least one oxidizing inorganic acid and the at least one saturated hydrocarbon is reintroduced to (re)contact the plastic material. The oxidizing inorganic acid is for example reintroduced after being separated from the plastic material in the separating step, to contact the plastic material in the contacting step by means of a looping system.

A particular method according to the present invention comprises the following steps:

- providing plastic material comprising or provided with ink;
- reducing the polymer material in size to obtain plastic material having a sieve diameter between 0.01 cm and 20 cm, for example between 0.01 cm and 10 cm or between 0.1 cm and 4 cm;
- contacting the plastic material with a mixture comprising at least one oxidizing inorganic acid and at least one saturated hydrocarbon while applying shear to the plastic material, the at least one oxidizing inorganic acid has a standard electrode potential of at least 0 V and the at least one saturated hydrocarbon has a number of carbon atoms of maximum 12 and preferably a number of carbon atoms ranging equal or larger than 5;
- optionally, separating the thus obtained plastic material from the mixture comprising the at least one oxidizing inorganic acid and the at least one saturated hydrocarbon.

In the method according to the present invention a wide variety of inorganic oxidizing acids and a wide variety of saturated hydrocarbons can be used.

The mixture may comprise one oxidizing inorganic acid or may comprise more than one, for example two or three different oxidizing inorganic acids. The mixture may comprise one saturated hydrocarbon or may comprise more than one saturated hydrocarbon, for example two or three different saturated hydrocarbons. The mixture may comprise one inorganic oxidizing acid and one saturated hydrocarbon or may comprise more than one inorganic oxidizing acid and more than one saturated hydrocarbon, for example two or three inorganic oxidizing acids and two or three saturated hydrocarbons.

The term 'hydrocarbon compound' refers to organic compounds comprising mainly carbon and hydrogen. Preferred hydrocarbon compounds consist entirely of carbon and hydrogen and do not comprise heteroatoms such as oxygen.

Saturated hydrocarbons comprise acyclic hydrocarbons (including linear hydrocarbons and branched hydrocarbons) and cyclic hydrocarbons. Acyclic alkanes are also referred to as alkanes and cyclic alkanes are referred to as cycloalkanes. Saturated hydrocarbons are apolar.

In the method according to the present invention cycloalkanes are preferred over alkanes because of their high diffusion rate through (apolar) polymer layers as for example through polypropylene or polyethylene polymer layers.

The at least one saturated hydrocarbon present in the mixture has maximum 12 carbon atoms. More preferably, the at least one saturated hydrocarbon has maximum 10 carbon atoms, maximum 8 carbon atoms, maximum 6 carbon atoms or maximum 5 carbon atoms.

Alkanes may have a linear or branched carbon chain. All carbon atoms in the structure of an alkane are $sp^3$ hybridized. The melting point and boiling point of an alkane is related to the length of the carbon chain. The longer the carbon chain, the higher the melting or boiling point. At standard temperatures, alkanes containing up to four carbon atoms are gases, and those containing 5 to 17 carbon atoms are liquids.

For the method according to the present invention alkanes having 5 to 12 carbon atoms including all their isomers and stereoisomers, are preferred. Particularly preferred alkanes comprises hexane, heptane and octane including all their isomers and stereoisomers.

Isomers of hexane comprise n-hexane, 2-methyl pentane, 3-methyl pentane, 2,2-dimethyl butane and 2,3-dimethyl butane.

Isomers of heptane comprise n-heptane, 2-methylhexane, 3-methylhexane, 2,2-dimethylpentane, 2,3-dimethylpentane, 2,4-dimethylpentane, 3-3-dimethylpentane, 3-ethyl-pentane and 2,2,3-trimethylbutane.

Isomers of octane comprise n-octane, 2-methylheptane, 2-methylheptane, 3-methylheptane (including 2 enantiomers), 4-methylheptane, 3-ethylhexane, 2,2-dimethylhexane, 2,3-dimethylhexane (including 2 enantiomers), 2,4-dimethylhexane (including 2 enantiomers), 2,5-dimethylhexane, 3,3-dimethylhexane, 3,4-dimethylhexane (including 2 enantiomers and 1 meso compound), 3-ethyl-2-methylpentane, 3-ethyl-3-methylpentane, 2,2,3-trimethylpentane (including 2 enantiomers), 2,2,4-trimethylpentane, 2,3,3-trimethylpentane, 2,3,4-trimethylpentane and 2,2,3,3-tetramethylbutane.

Cycloalkanes comprise a ring-shaped structure of $sp^3$ hybridized carbon atoms. Cycloalkanes comprise monocyclic alkanes (comprising one ring structure), either substituted or non-substituted and polycyclic alkanes (comprising more than one ring structure), for example bicyclic alkanes (comprising two ring structures), either substituted or non-substituted.

The number of rings in a cycloalkane is defined as the minimum number of bonds that must be broken in order to convert the molecule in an open-chain fragment.

For the method according to the present invention cycloalkanes having 5 to 12 carbon atoms are preferred. Cycloalkanes having a ring of 5 to 12 carbon atoms are preferred. Examples of cycloalkanes comprise cyclopentane, cyclohexane, cycloheptane or cyclooctane, either substituted or non-substituted.

Examples of monocyclic alkanes comprise cyclobutane, preferably substituted cyclobutane, for example methyl-cyclobutane, ethyl-cyclobutane, ethylmethyl-cyclobutane, dimethyl-cyclobutane, diethyl-cyclobutane; cyclopentane either substituted or non-substituted, for example cyclopentane, methyl-cyclopentane, ethyl-cyclopentane, methylethyl-cyclopentane, dimethyl-cyclopentane, diethyl-cyclopentane; cyclohexane, either substituted or non-substituted, for example cyclohexane, methyl-cyclohexane, ethyl-cyclohexane, methylethyl-cyclohexane, dimethyl-cyclohexane, diethyl-cyclohexane.

Examples of bicyclic alkanes comprise for example bicyclo[2.2.0]hexane, bicyclo[2.1.1]hexane, bicyclo[2.2.1]heptane, bicyclo[4.4.0]decane and bicyclo[4.3.1]decane.

The term 'inorganic acid' refers to all acidic compounds that originate from an inorganic (or mineral) source. In contrast to organic acids, inorganic acids do not comprise covalent carbon - hydrogen bond or bonds.

The inorganic acid used in the method according to the present invention has preferably a minimum oxidation potential, i.e. a minimum standard electrode potential. Preferably, the inorganic acid has a standard electrode potential of at least 0 V. More preferably, the inorganic acid used in the method according to the present invention has an electrode potential of at least 0.2 V, an electrode potential 0.5 V or an electrode potential of at least 1 V. Inorganic acids having a high standard electrode potential are preferred.

For the purpose of this invention, inorganic acids having a standard electrode potential of at least 0 V are referred to as oxidizing inorganic acids.

Theoretically, all Brønsted acids have a certain oxidation potential, since their acidic proton can be reduced to hydrogen gas. The capacity of an acid to have oxidation potential and thus to act as an oxidizing agent can be expressed by the standard electrode potential. The higher the standard electrode potential, the higher the capacity to act as an oxidizing agent.

Some examples of inorganic acids with their standard electrode potential are given below.

| | | |
|---|---|---|
| Phosphoric acid: | $H_3PO_4(aq) + 2H^+ + 2e^- \rightleftharpoons H_3PO_3(aq) + H_2O$ | (-0.276V) |
| Sulfuric acid: | $SO_4^{2-} + 4H^+ + 2e^- \rightleftharpoons SO_2(aq) + 2H_2O$ | (+0.17V) |
| Arsenic acid: | $H_3AsO_4(aq) + 2H^+ + 2e^- \rightleftharpoons H_3AsO_3(aq) + H_2O$ | (+0.56V) |
| Nitric acid: | $NO_3^-(aq) + 2H^+ + e^- \rightleftharpoons NO_2(g) + H_2O$ | (+0.80V) |
| Perchloric acid: | $ClO_4^- + 2H^+ + 2e^- \rightleftharpoons ClO_3^- + H_2O$ | (+1.20V) |

Within the context of the present invention, sulfuric acid, arsenic acid, nitric acid, and perchloric acid are considered as oxidizing inorganic acids whereas phosphoric acid is not considered as an oxidizing inorganic acid.

Preferred inorganic acids used in the method according to the present invention are acids containing oxygen (oxyacids). Such inorganic acids usually have a higher oxidation potential.

Preferred examples of inorganic acids for use in the method according to the present invention comprise $HNO_3$, $H2SO4$, $HClO_4$, $H_2CrO_4$, $H_2SeO_4$, $HMnO_4$, $HTcO_4$, $HReO_4$, $H3PO4$, $H_3ASO_4$, $H_2TeO_4$, $HBrO_4$ and $HIO_4$.

The at least one saturated hydrocarbon is preferably present in the mixture in a concentration of at least at least 5 vol%. More preferably, the at least one saturated hydrocarbon is present in the mixture in a concentration of at least 20 vol%, at least 40 vol%, at least 50 vol%, at least 60 vol%, at least 80 vol%, at least 90 vol% or at least 95 vol%. In case the mixture comprises more than one saturated hydrocarbon, the sum of the concentrations of the saturated hydrocarbons is at least 5 vol%, more preferably at least 20 vol%, at least 40 vol%, at least 50 vol%, at least 60 vol%, at least 80 vol%, at least 90 vol% or at least 95 vol%.

The at least one inorganic oxidizing acid is preferably present in the mixture in a concentration of at least at least 5 vol%. More preferably, the at least one inorganic oxidizing acid is present in the mixture in a concentration of at least 20 vol%, at least 40 vol%, at least 50 vol%, at least 60 vol%, at least 80 vol%, at least 90 vol% or at least 95 vol%. In case the mixture comprises more than one inorganic oxidizing acid, the sum of the concentrations of the inorganic oxidizing acids is at least 5 vol%, more preferably at least 20 vol%, at least 40 vol%, at least 50 vol%, at least 60 vol%, at least 80 vol%, at least 90 vol% or at least 95 vol%.

Preferred mixtures comprise at least 5 vol% of an inorganic oxidizing acid and at least 5 vol% of a saturated hydrocarbon, for example at least 20 vol% of an inorganic oxidizing acid and at least 20 vol% of a saturated hydrocarbon or at least 40 vol% of an inorganic oxidizing acid and at least 40 vol% of a saturated hydrocarbon, for example 50 vol% of an inorganic oxidizing acid and 50 vol% of a saturated hydrocarbon.

In case an oxidizing inorganic acid having a standard electrode potential lower than 0.2 V is used, the concentration of the inorganic acid is preferably higher than 40 vol%, more preferably higher than 50 vol%, 60 vol%, 70 vol%, higher than 80 vol%, higher than 90 vol% or higher than 95 vol%.

In particular methods, the concentration of the inorganic oxidizing acid in the mixture is higher than the concentration of the saturated hydrocarbon in the mixture. The concentration of the saturated hydrocarbon is for example at least 5 vol% and the concentration of the inorganic acid is for example higher than 20 vol %, for example higher than 40 %, higher than 50 vol%, higher than 60 vol%, higher than 80 vol%, higher than 90 vol%.

In preferred methods of the present invention, the plastic material is contacted with the mixture comprising the at least one inorganic oxidizing acid and the at least one saturated hydrocarbon at a temperature of at least 20 °C. In particular methods, the plastic material is contacted with the mixture at a temperature of at least 50 °C, at a temperature of at least 80 °C, at a temperature of at least 100 °C. The temperature is preferably lower than 120 °C and in some methods lower than 100 °C. It is clear that the temperature should be lower than the melting temperature of the plastic material. To reach the required temperature the mixture comprising the at least one oxidizing inorganic acid and the at least one saturated hydrocarbon can be heated.

The concentration of the oxidizing inorganic acid and/or the concentration of the at least one saturated hydrocarbon in the mixture as well as the temperature of the mixture may influence the efficiency of the deinking and/or delaminating method, for example the efficiency of the oxidizing capacity of the inorganic acid. Some plastic materials and/or inks do not show reaction with a diluted inorganic oxidizing acid but in case the inorganic oxidizing acid is present in a high concentration, it may act as an oxidizing agent. For instance, certain polymer materials do not show reaction with diluted sulfuric acid whereas highly concentrated sulfuric acid acts as an oxidizing agent. In addition a strong oxidizing inorganic acid has ability to hydrolyze inks including cross-linked inks comprising for example acrylic resins.

One expects that the deinking will improve by increasing the amount of mixture comprising the at least one oxidizing inorganic acid and the at least one saturated hydrocarbon when contacting the plastic material with the mixture. Contrary to these expectations, it was surprisingly found that a higher loading of plastic material in the contacting step (i.e. a higher amount of plastic material per volume of mixture comprising the at least one oxidizing inorganic acid and the at least one saturated hydrocarbon) results in an improved deinking.

For the purpose of this invention, the loading of the plastic material is expressed as the volume of the plastic material ($V_{pm}$) over the volume of the mixture comprising the at least one oxidizing inorganic acid and the at least one saturated hydrocarbon ($V_{mixture}$): $\frac{V_{pm}}{V_{mixture}}$.

For the purpose of the present invention improved deinking refers to either obtaining faster deinking (higher deinking rate) and/or obtaining a higher degree of deinking (higher % of deinked material).

Although applicant does not want to be bound by any theory, it is assumed that the positive effect on the deinking using a high loading of plastic per volume of mixture of the at least one oxidizing inorganic acid and the at least one saturated hydrocarbon is the result of the increased mutual contact between plastic material, in particular when shear is applied to the plastic material, for example when the plastic material and the mixture comprising the at least one oxidizing inorganic acid and the at least one saturated hydrocarbon is stirred. Due to the increased mutual contact between plastic material, the friction between plastic material is increased. The term 'friction' refers to the force of rubbing two materials or two faces against one another.

In preferred methods of the present invention, during the contacting of the plastic material with the mixture comprising the at least one oxidizing inorganic acid and the at least one saturated hydrocarbon, the plastic material and the mixture are present in amounts so that the volume of the plastic material ($V_{pm}$) over the volume of the mixture ($V_{mixture}$) is ranging between 0.1 and 10 :

$$0.1 < \frac{V_{pm}}{V_{mixture}} < 10$$

More preferably, during the contacting of the plastic material with the mixture, the plastic material and mixture are present in amounts so that the volume of the plastic material ($V_{pm}$) over the volume of the mixture $V_{mixture}$) is ranging between 0.5 and 2.5 $\left(0.5 < \frac{V_{pm}}{V_{mixture}} < 2.5\right)$ or between or between 0.8 and 1.2 $\left(0.8 < \frac{V_{pm}}{V_{mixture}} < 1.2\right)$. The volume of the plastic material ($V_{pm}$) over the volume of the mixture ($V_{mixture}$) is for example equal to $1 \left(\frac{V_{pm}}{V_{mixture}} = 1\right)$.

Preferably, the plastic material and the mixture comprising the at least one oxidizing inorganic acid and the at least one saturated hydrocarbon are introduced in a container to allow contacting of the plastic material with the mixture. Preferably, the ratio of the volume of the plastic material ($V_{pm}$) in the container over the volume of the mixture in the container ($V_{mixture}$) is ranging between 0.1 and 10, more preferably between 0.5 and 2.5 or between 0.8 and 1.2.

Deinking and/or delaminating can be further improved by applying shear on the plastic material introduced in the container.

In preferred methods, the plastic material is reduced in size, preferably before being introduced in the container and/or before being contacted with the mixture comprising the at least one oxidizing inorganic acid and the at least one saturated hydrocarbon. The reduction in size can be obtained by any technique known in the art, for example by milling, shredding, grinding and/or comminuting. The plastic material is preferably reduced in size to obtain plastic material having a sieve diameter between 0.01 cm and 20 cm, for example between 0.01 cm and 10 cm or between 0.1 cm and 4 cm.

The method can be conducted under inert atmosphere, for example under nitrogen ($N_2$) atmosphere, although it is also possibly to conduct the method under atmospheric pressure or under an increased pressure.

It is clear that the mixture used in the method according to the present invention may comprise further components as for example one or more catalyst or surfactant. A surfactant is for example added to improve the wetting of the polymer material.

The method according to the present invention may comprise one or more additional steps. Any method described above may comprise such one or more additional steps.

Such additional steps may comprise one or more conditioning steps, one or more polymer sorting steps, one or more comminuting steps, one or more steps to recover the inorganic acid and/or the saturated hydrocarbon, one or more steps to recover inks and/or plastic layers, one or more solvent recovery steps, one or more rinsing or washing steps for example to remove remnants such as acid remnants, and/or one or more drying steps.

An example of a conditioning step comprises steps to remove paper or cardboard.

Examples of comminuting steps comprise cutting, shredding, milling and/or grinding.

Polymer sorting steps comprise for example steps using wind shifting, density separation and/or near infra-red (NIR) separation.

Recovery steps of for example inks or solvents comprise for examples steps using membrane technologies, adsorption technologies and/or distillation.

As plastic material, any type of plastic material including plastic waste can be considered. The main target plastic material comprises polyolefin based material such as for example polyethylene (PE) (including low-density polyethylene (LDPE) and high-density polyethylene (HDPE)) and polypropylene (PP). However, the method according to the present invention is also suitable to deink and/or delaminate other plastic materials such as polyethylene terephthalate (PET), polyurethane (PU), polyamide (PA), polystyrene (PS), polycarbonate (PC), ethylene vinyl alcohol (EVOH), ethylene vinyl acetate (EVA), polyvinyl chloride (PVC) or copolymers or combinations thereof.

Plastic material also comprises plastic waste, for example waste flows comprising polyolefin based material such as PE or PP, either rigid or non-rigid (films), such waste flows are sometimes referred to as DKR 310 (plastic films), DKR 321 (polyolefin plastic bottles), DKR 323 (mixed polyolefin items), DKR 323-2 (flexible polyolefin items), DKR 324 (polypropylene) and DKR 329 (polyethylene). The method according to the present invention is also suitable for plastic waste comprising for example PET, PU, PA, PS, PC, EVOH, EVA, PVC or copolymers or combinations thereof.

Plastic material may comprise monolayer material or multilayer material comprising multiple layers of plastic films.

Examples of monolayer material comprise polyethylene (PE) and polypropylene (PP) films.

Examples of multilayer material comprise PE/PET, PE/EVOH/PET, PE/PA, PP/PP, PP/PE/PP. Multilayer material may also comprise a metal or metallized layer such as an aluminum layer or an aluminum-based layer. An example of a multilayer comprising a metal layer is PE/Al/PET.

The plastic material such as the plastic waste may comprise contaminants and/or dirt. Contaminants refer to all the components of the plastic material that are not part of the polymer structure. Contaminants comprise for example additives, coatings, such as barrier coatings, metal coatings or biocoatings, adhesives, inks and labels such as plastic labels or paper labels. Dirt refers to impurities that adhere to the plastic material during their life cycle such as dust, soil, grease and organic waste.

Plastic waste may comprise post-industrial plastic waste and post-consumer plastic waste. Post-industrial plastic waste includes material that is used or produced in a manufacturing process and comprises for example films such as stretch films. Post-industrial plastic waste usually comprises homogeneous material, composed of a single plastic type or of a limited number of plastic types and is usually clean.

Post-consumer plastic waste includes material that has already been used by the end user and comprises for example bottles, trays, films, packaging material and household items. Post-consumer plastic waste usually comprises a mixture of different polymer materials that might be highly contaminated and dirty. The polymer material possibly suffered from degradation during service life.

Plastic material comprising or provided with ink refers to all plastic material, monolayer as well as multilayer plastic material, comprising or provided with at least one ink.

The ink can be applied on the plastic material by any technique known in the art, for example a printing technique. The at least one ink can be present on the outer surface of the plastic material or can be covered by one or more layers, for example one or more polymer layer.

The plastic material such as the plastic waste may comprise or be provided with different types of inks such as solvent-based inks, water-based inks and UV-based inks and may comprise a combination of different types of inks. The inks can be applied on top of the plastic material or between different plastic layers of a multilayer structure. Furthermore, the inks can be embedded in or covered with a layer, such as a polymer based layer, a varnish, or barrier layer. The inks can be cross-linked.

The main ingredients of inks are pigments, dyes, binders and additives, for example surfactants and/or solubilizers.

Pigments (organic or inorganic) or dyes give color and opacity to the ink and may influence the fluidity of the ink. Binders, usually low-molecular-weight polymeric resins, disperse the pigments and retain them on the plastic surface after printing. The carrier is a liquid, providing fluidity and allowing the transfer of the ink from the printing system to the substrate. Additives in the ink may for example comprise waxes, surfactants, drying agents and antioxidizing agents.

The at least one ink is for example selected from the group consisting nitrocellulose based resins, polyurethane based resins, polyvinylchloride based resins, ethyl cellulose based resins, cellulose acetate propionate based resins, cellulose acetate butyrate based resins, polyvinyl butyral based resins, acrylate based resins, polyacrylate based resins, polyamide based resins, maleics based resins, modified rosin based resins, alkyd based resins and any combination thereof.

The method according to the present invention allows to obtain simultaneous deinking and delamination, i.e. in one single step. This is an important advantage compared to methods requiring two consecutive steps. It is clear that a single step process reduces the complexity and the costs of the process considerably.

According to a second aspect of the present invention an installation to deink plastic material, to delaminate plastic material or to deink and to delaminate plastic material is provided. The installation is in particular suitable to deink plastic waste, to delaminate plastic waste and/or to deink and to delaminate plastic waste.

The installation comprises means to provide plastic material, means to provide a mixture comprising at least one oxidizing inorganic acid and at least one saturated hydrocarbon and means to bring the mixture in contact with the plastic material. The installation may further comprise means to rinse the plastic material and/or means to dry the plastic material. Optionally, the installation to deink plastic material further comprises means to condition the plastic material, for example means to remove paper or cardboard, means for comminuting the plastic material, means to recover the inorganic acid and/or saturated hydrocarbon, means to recover inks and/or plastic layers, means to recover solvent, means for rinsing or washing and/or for removing remnants such as acid remnants and/or saturated hydrocarbon remnants and/or means to dry the plastic material.

As the inorganic oxidizing acid and the saturated hydrocarbon do not react with each other and create an immiscible mixture, it is possible to recover the inorganic oxidizing acid and the saturated hydrocarbon with very high purity and at low costs.

## Description of embodiments

The present invention will be described with respect to particular embodiments but the invention is not limited thereto but only by the claims.

When referring to the endpoints of a range, the endpoints values of the range are included.

When describing the invention, the terms used are construed in accordance with the following definitions, unless indicated otherwise.

The term 'and/or' when listing two or more items, means that any one of the listed items can by employed by itself or that any combination of two or more of the listed items can be employed.

The terms 'first', 'second' and the like used in the description as well as in the claims, are used to distinguish between similar elements and not necessarily describe a sequence, either temporally, spatially, in ranking or in any other manner. It is to be understood that the terms so used are interchangeable under appropriate circumstances and that the embodiments of the invention described herein are capable of operation in other sequences than described or illustrated herein.

## Examples and experimental results

### Example 1

A multilayer plastic packaging film comprising an oriented polypropylene (OPP) layer, a nitrocellulose-based magenta ink, a polyurethane-based adhesive and a polyethylene (PE) layer, in this sequence, was reduced in size to obtain squares with a side length of 2 cm. The reduced multilayer plastic films were brought into contact with a mixture comprising sulfuric acid (96 w/w%) and cyclohexane (>99 w/w%) in a volume ratio of 10:90 v% respectively, at 60 °C under inert atmosphere and under continuous stirring with an agitator at 400 rpm.

The multilayer plastic packaging film was fully deinked and delaminated to its constituent polymer layers. The transparent delaminated plastic films (OPP and PE films) were separated from the medium via filtration.

### Example 2

A monolayer plastic packaging film comprising a transparent oriented polypropylene (OPP) substrate, a cross-linked acrylate resin, a UV-based white ink layer and a cyan ink on the top layer, was reduced in size to obtain squares with a side length of 0.5 cm. The reduced monolayer plastic films were brought into contact with a mixture comprising sulfuric acid (96 w/w%) and hexane (99 w/w%) in a volume ratio of 25:75 v% respectively, at 60 °C under inert atmosphere under continuous stirring with an agitator at 500 rpm.

The plastic packaging film was fully deinked. The transparent OPP film was separated from the medium via filtration.

**Example 3**

A monolayer plastic packaging film comprising a oriented polypropylene (OPP) layer, a nitrocellulose/polyurethane resin, and a solvent-based black ink layer, respectively, was reduced in size by a shredder to obtain particles having a sieve diameter of 0.01 cm. The obtained particles were brought into contact with a mixture comprising sulfuric acid (96 w/w%) and methylcyclohexane (99 w/w%) in a volume ratio of 20:80 v% respectively, at 70 °C under inert atmosphere and under continuous stirring with an agitator at 500 rpm. The transparent OPP film was separated from the medium via filtration.

**Example 4**

A multilayer plastic packaging film comprising a polyethylene terephthalate (PET) layer, a nitrocellulose-based black ink, urethane-based white ink, a polyurethane-based adhesive, an aluminium layer and a polypropylene (PP) layer, in this sequence, was reduced in size to obtain squares with a side length of 2 cm. The reduced multilayer plastic films were brought into contact with a mixture comprising sulfuric acid (96 w/w%) and cyclohexane (>99 w/w%) in a volume ratio of 80:20 v% respectively, at 60 °C under inert atmosphere and under continuous stirring with an agitator at 500 rpm. The multilayer plastic film was fully deinked. The transparent plastic films were separated from the medium via filtration.

**Example 5**

A multilayer plastic packaging film comprising an oriented polypropylene (OPP) layer, a nitrocellulose-based magenta ink, a polyurethane-based adhesive and a polypropylene (PP) layer, in this sequence, was reduced in size to obtain squares with a side length of 1 cm. The reduced multilayer plastic films were brought into contact with a mixture comprising sulfuric acid (96 w/w%) and 2,2,3- trimethylbutane (99 w/w%) in a volume ratio of 5:95 v% respectively, at 40 °C under inert atmosphere and under continuous stirring with an agitator at 500 rpm.

The multilayer plastic film was fully deinked and delaminated to its constituent polymer layers. The transparent delaminated plastic films (OPP and PP films) were separated from the medium via filtration.

**Claims**

1. A method to deink and/or to delaminate plastic material, the method comprising the steps of

   - providing plastic material comprising or provided with ink;
   - contacting the plastic material with a mixture comprising at least one oxidizing inorganic acid and at least one saturated hydrocarbon, with the at least one oxidizing inorganic acid having a standard electrode potential of at least 0 V and the at least one saturated hydrocarbon having a number of carbon atoms of maximum 12; and
   - optionally, separating the thus obtained plastic material from the mixture comprising the at least one oxidizing inorganic acid and the at least one saturated hydrocarbon.

2. Method according to claim 1, wherein the at least one saturated hydrocarbon has a number of carbon atoms ranging between 5 and 8.

3. Method according to claim 1 or 2, wherein the at least one saturated hydrocarbon comprises an acyclic alkane or a cyclic alkane.

4. Method according to any one of the preceding claims, wherein the at least one oxidizing inorganic acid comprises an oxyacid.

5. Method according to any one of the preceding claims, wherein the at least one oxidizing inorganic acid is selected from the group consisting of $HNO_3$, $H_2SO_4$, $HClO_4$, $H_2CrO_4$, $H_2SeO_4$, $HMnO_4$, $HTcO_4$, $HReO_4$, $H_3PO_4$, $H_3AsO_4$, $H_2TeO_4$, $HBrO_4$ and $HIO_4$.

6. A method according to any one of the preceding claims, wherein shear is applied to the plastic material before or while contacting the plastic material with the mixture comprising the at least one oxidizing inorganic acid and the at least one saturated hydrocarbon.

7. Method according to any one of the preceding claims, wherein the concentration of the saturated hydrocarbon in the mixture is at least 5 vol% and/or wherein the concentration of the oxidizing inorganic acid is at least 5 vol%.

8. Method according to any one of the preceding claims, wherein the concentration of the inorganic oxidizing acid in the mixture is higher than the concentration of the saturated hydrocarbon.

9. Method according to any one of the preceding claims, wherein the plastic material is contacted with the mixture at a temperature of at least 20 °C.

10. Method according to any one of the preceding claims, wherein the plastic material is reduced in size to obtain plastic material having a sieve diameter ranging between 0.01 cm and 20 cm before being contacting the plastic material with the mixture comprising the at least one oxidizing inorganic acid and the at least one saturated hydrocarbon.

11. Method according to any one of the preceding claims, wherein the plastic material comprises monolayer and/or multilayer plastic material.

12. Method according to any one of the preceding claims, wherein the plastic material comprises or is provided with one type of ink or with a plurality of different types of inks, with the ink or inks being applied at the outer surface of a monolayer or multilayer plastic material or between different layers of a multilayer plastic material.

13. Method according to any one of the preceding claims, wherein the contacting of the plastic material with the mixture comprising the at least one oxidizing inorganic acid and the at least one saturated hydrocarbon is conducted under inert atmosphere.

14. An installation to deink and/or to delaminate plastic material using the method as defined in any one of claims 1 to 13.

Europäisches
Patentamt

European
Patent Office

Office européen
des brevets

# EUROPEAN SEARCH REPORT

Application Number

EP 21 21 5600

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 828 228 A1 (BOREALIS AG [AT]) 2 June 2021 (2021-06-02) * paragraphs [0001], [0002], [0067], [0044] – [0048], [0024]; claims 1,4; table 4 * | 1-14 | INV. B29B17/02 C09D9/00 |
| A,D | WO 2021/198437 A2 (UNIV GENT [BE]) 7 October 2021 (2021-10-07) * paragraphs [0001], [0026], [0110], [0119], [0120] * | 1-14 | |
| A | WO 2012/151291 A2 (FULLER RON [US]) 8 November 2012 (2012-11-08) * page 2, last paragraph * * page 5, line 14 – line 15 * | 1-14 | |
| A,D | EP 1 419 829 A1 (DUCHENAUD UNIFLEXO [FR]) 19 May 2004 (2004-05-19) * paragraph [0016]; figure 1 * | 1-14 | |
| A | WO 2021/018605 A1 (BOREALIS AG [AT]) 4 February 2021 (2021-02-04) * claims 1-5 * | 1-14 | TECHNICAL FIELDS SEARCHED (IPC) B29B C09G B29K B29L C09D B41M C11D B08B C08J |

The present search report has been drawn up for all claims

| Place of search | Date of completion of the search | Examiner |
|---|---|---|
| Munich | 31 May 2022 | Ferrer Santos, A |

EPO FORM 1503 03.82 (P04C01)

## ANNEX TO THE EUROPEAN SEARCH REPORT
## ON EUROPEAN PATENT APPLICATION NO.

EP 21 21 5600

This annex lists the patent family members relating to the patent documents cited in the above-mentioned European search report.
The members are as contained in the European Patent Office EDP file on
The European Patent Office is in no way liable for these particulars which are merely given for the purpose of information.

31-05-2022

| Patent document cited in search report | | Publication date | Patent family member(s) | | Publication date |
|---|---|---|---|---|---|
| EP 3828228 | A1 | 02-06-2021 | EP 3828228 A1 | | 02-06-2021 |
| | | | WO 2021104797 A1 | | 03-06-2021 |
| WO 2021198437 | A2 | 07-10-2021 | NONE | | |
| WO 2012151291 | A2 | 08-11-2012 | CA 2834385 A1 | | 08-11-2012 |
| | | | US 2012279524 A1 | | 08-11-2012 |
| | | | WO 2012151291 A2 | | 08-11-2012 |
| EP 1419829 | A1 | 19-05-2004 | EP 1419829 A1 | | 19-05-2004 |
| | | | FR 2847179 A1 | | 21-05-2004 |
| WO 2021018605 | A1 | 04-02-2021 | BR 112022001150 A2 | | 15-03-2022 |
| | | | CA 3148208 A1 | | 04-02-2021 |
| | | | CN 114206514 A | | 18-03-2022 |
| | | | EP 4004129 A1 | | 01-06-2022 |
| | | | KR 20220035484 A | | 22-03-2022 |
| | | | TW 202111021 A | | 16-03-2021 |
| | | | WO 2021018605 A1 | | 04-02-2021 |

**REFERENCES CITED IN THE DESCRIPTION**

**Patent documents cited in the description**

- EP 2832459 A
- EP 1419829 A
- DE 19651571
- WO 2021198437 A